(19) Europäisches Patentamt
European Patent Office
Office européen des brevets

(11) **EP 1 704 396 B1**

## (12) FASCICULE DE BREVET EUROPEEN

(45) Date de publication et mention
de la délivrance du brevet:
**02.10.2013 Bulletin 2013/40**

(21) Numéro de dépôt: **04804769.0**

(22) Date de dépôt: **10.12.2004**

(51) Int Cl.:
***G01K 7/32*** *(2006.01)*

(86) Numéro de dépôt international:
**PCT/EP2004/053401**

(87) Numéro de publication internationale:
**WO 2005/071375 (04.08.2005 Gazette 2005/31)**

(54) **CAPTEUR DE TEMPERATURE INTERROGEABLE A DISTANCE**

AUS DER FERNE TESTBARER TEMPERATURSENSOR

REMOTELY TESTABLE TEMPERATURE SENSOR

(84) Etats contractants désignés:
**AT BE BG CH CY CZ DE DK EE ES FI FR GB GR HU IE IS IT LI LT LU MC NL PL PT RO SE SI SK TR**

(30) Priorité: **24.12.2003 FR 0315351**

(43) Date de publication de la demande:
**27.09.2006 Bulletin 2006/39**

(73) Titulaire: **Senseor**
**06250 Mougins (FR)**

(72) Inventeurs:
• **PENAVAIRE, Louis,**
**THALES Intellectual Property**
**F-94117 ARCUEIL Cedex (FR)**
• **SOLAL, Marc,**
**THALES Intellectual Property**
**F-94117 ARCUEIL Cedex (FR)**
• **PASTUREAUD, Thomas,**
**THALES Intellectual Property**
**F-94117 ARCUEIL Cedex (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A- 1 324 489       WO-A1-03/034013**
**GB-A- 2 386 684       US-A1- 2002 079 989**

• BUFF W ET AL: "UNIVERSAL PRESSURE AND TEMPERATURE SAW SENSOR FOR WIRELESS APPLICATIONS" PROCEEDINGS OF THE 1997 IEEE ULTRASONICS SYMPOSIUM. ONTARIO, CANADA, OCT. 5 - 8, 1997, IEEE ULTRASONICS SYMPOSIUM PROCEEDINGS, NEW YORK, NY : IEEE, US, vol. VOL. 1, 5 octobre 1997 (1997-10-05), pages 359-362, XP000848493 ISBN: 0-7803-4154-6

**Description**

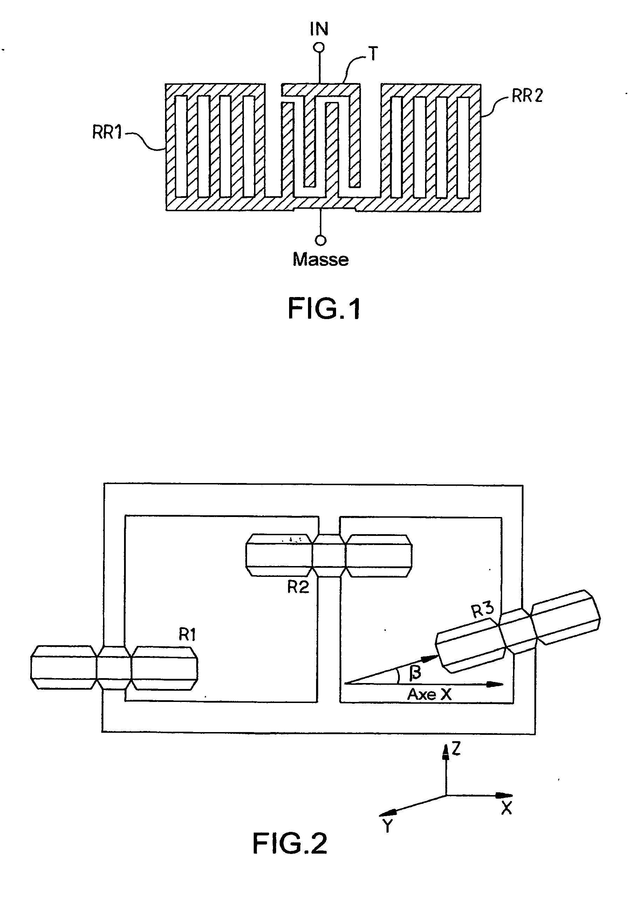

Les capteurs basés sur les ondes acoustiques de surface sont connus depuis les années 1970. Le principe est de mesurer la variation de fréquence ou de retard d'un dispositif SAW. Un tel capteur est décrit par exemple par W. Buff et al., 1997 Ultrasonics Symposium, pages 359-362, <<Universal Pressure and Temperature SAW sensor for wireless applications>>. En effet, les contraintes appliquées sur le substrat se traduisent par une déformation de celui-ci ainsi que par une variation de la vitesse des ondes de surface. Si un dispositif est réalisé à la surface du substrat, ces effets mécaniques se traduiront par une variation de fréquence centrale du dispositif ainsi que par une variation de son retard. Les variations de température donnent des effets analogues (dilatation et variation de vitesse). Un principe habituel est de réaliser un résonateur à la surface du substrat. En effet, du fait de la très faible bande passante de ce type de dispositif, il est possible de mesurer précisément les variations de fréquence. Un résonateur à ondes acoustiques de surface est constitué d'un transducteur à peignes interdigités T placé entre deux réseaux réflecteurs RR1 et RR2 comme illustré en figure 1. Les réseaux réflecteurs se comportent comme des miroirs et il existe donc des fréquences de résonance pour lesquelles le trajet aller retour dans la cavité est égal à un nombre entier de longueurs d'ondes. Les modes de résonance pour ces fréquences sont excités par le transducteur placé entre les miroirs.

Les fréquences de résonance se traduisent par des variations rapides de l'admittance du composant.

Il est également connu la possibilité de l'interrogation à distance de capteurs à base d'onde de surface. Le principe est de connecter l'entrée du transducteur à une antenne radiofréquence. Lorsque l'antenne reçoit un signal électromagnétique, celui-ci donne naissance à des ondes sur la surface du substrat qui sont elles-mêmes reconverties en énergie électromagnétique sur l'antenne. Ainsi, le dispositif constitué d'un résonateur connecté à une antenne a une réponse à la fréquence de résonance du résonateur et il est possible à distance de mesurer cette fréquence. On peut ainsi réaliser des capteurs interrogeables à distance. Cette possibilité est un avantage important des ondes acoustiques de surface et est utilisée dans le cadre des capteurs de pression de pneumatiques. En effet, il est intéressant de pouvoir placer le capteur dans le pneumatique alors que l'électronique d'interrogation est sur le véhicule.

Plus précisément il a déjà été proposé des structures de capteur comprenant un ensemble de trois résonateurs telle qu'illustrée en figure 2.

Ces trois résonateurs fonctionnent à des fréquences différentes. Le principe de mesure est basé sur une mesure de l'écart de fréquences entre deux résonateurs. Un premier résonateur R1 permet d'obtenir une fréquence de référence. La mesure de pression est obtenue en soumettant un second résonateur R2 seul à une pression.

Les résonateurs R1 et R2 étant à la même température, l'écart de fréquence obtenu pour ces deux résonateurs est proportionnel uniquement à la pression appliquée.

Typiquement si l'ensemble des résonateurs est réalisé à la surface d'un substrat de quartz, de coupe Y + θ ( dans un repère cristallographique X,Y,Z tel que représenté sur la figure 2), la direction de propagation utilisée est la direction X pour les résonateurs R1 et R2.

Un troisième résonateur R3 est utilisé sans contrainte de pression, mais est positionné avec un angle β par rapport à l'axe X, pour mesurer la température, l'axe de propagation des ondes acoustiques de surface est dans ce cas l'axe X', faisant un angle β avec l'axe X.

Tous les résonateurs ont une loi de dépendance Fréquence/Température, quadratique, avec un coefficient du second ordre qui peut être considéré comme identique. En effet, ce coefficient du second ordre est dépendant essentiellement du matériau utilisé. Lorsque l'on utilise du quartz de coupe dite ST, c'est à dire ayant une coupe comprise entre Y+30° et Y+42.75°, ce coefficient CTF2 est égal pour une propagation suivant l'axe X à environ 3.3 $10^{-8}$/°C. En d'autres termes, si f0 est la fréquence centrale nominale du dispositif, sa fréquence f suivra en fonction de la température T une loi du type : $$\frac{f - f_0}{f_0} = CTF2(T - T0)^2$$

La température T0 correspond au sommet de la parabole et est appelée température d'inversion (ou tum over température en anglais). On montre également que le coefficient du 2ème ordre CTF2 varie peu lorsque la direction de propagation s'écarte de l'axe X.

Par contre, la température d'inversion de la courbe Fréquence/ Température, dépend de l'angle de propagation.

La différence de fréquence entre le résonateur de référence (fréquence f1) et le résonateur incliné (fréquence f2) est donc proportionnelle à la température. Cette différence suit la loi :

$$\frac{f1 - f_{01}}{f_{01}} = CTF2(T - T01)^2$$

$$\frac{f2 - f_{02}}{f_{02}} = CTF2(T - T02)^2$$

$$f2 - f1 \cong f_{02} - f_{01} + CTF2\left(f_{02}T02^2 - f_{01}T01^2\right) - 2CTF2(f02T02 - f01T01)T$$

$$f2 - f1 \cong \{f2 - f1\}(T = 0) - 2CTF2T02\frac{f02 + f01}{2}T$$

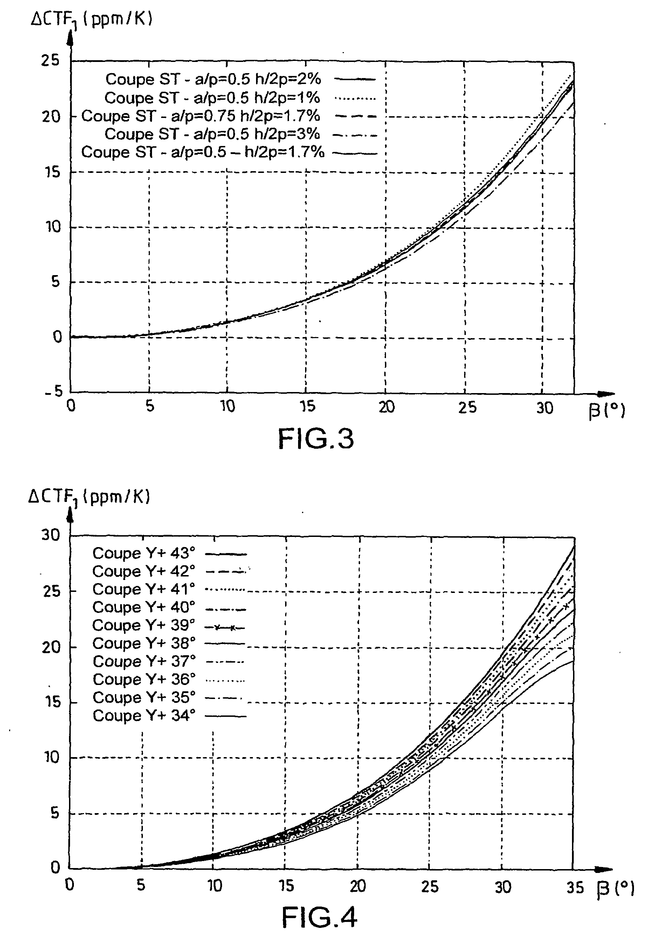

L'écart de fréquence est donc proportionnel à la température multipliée par un coefficient égal au produit de l'écart de température d'inversion par le double du coefficient du second ordre. La sensibilité du capteur à la température est donc proportionnelle à l'écart de température d'inversion. O n peut également estimer cette sensibilité par l'écart des coefficients de dérive linéaire CTF1 de température entre la propagation pour l'angle nul et pour un angle donné. Cet écart de CTF1 donne directement la variation relative de fréquence avec la température. La figure 3 montre l'évolution de cet écart de CTF1 en ppm/°C pour la coupe ST pour différents points de fonctionnement (épaisseur/ taux de métallisation). Dans ces courbes, a désigne la largeur des électrodes, h désigne l'épaisseur de métallisation des électrodes et p la période des électrodes. L'ensemble de ces courbes très rapprochées montre que la courbe d'écart de CTF1 dépend très peu du point de fonctionnement puisque l'on observe au maximum un écart de 2ppm/°C pour 22 ppm/°C pour l'angle de propagation de 30° par rapport à x. On peut donc considérer en première approximation que cet écart de CTF1 n'en dépend pas. D'autre part, la figure 4 montre les variations de cet écart de CTF1 ΔCTF1 pour différents angles de coupe θ et différents angles de propagation.

On a pu montrer que cet écart de CTF1 est approché de manière très précise par la forme :

$$\Delta CTF1(ppm / °C) = (0.4471.10^{-3}\theta - 6.153.10^{-3})\beta^2$$
$$+ (0.1848.10^{-6}\theta + 1.88.10^{-6})\beta^4$$

Dans cette équation, θ est l'angle de coupe en degrés, β l'angle de propagation en degrés. Cette équation permet donc de déterminer la sensibilité du capteur.

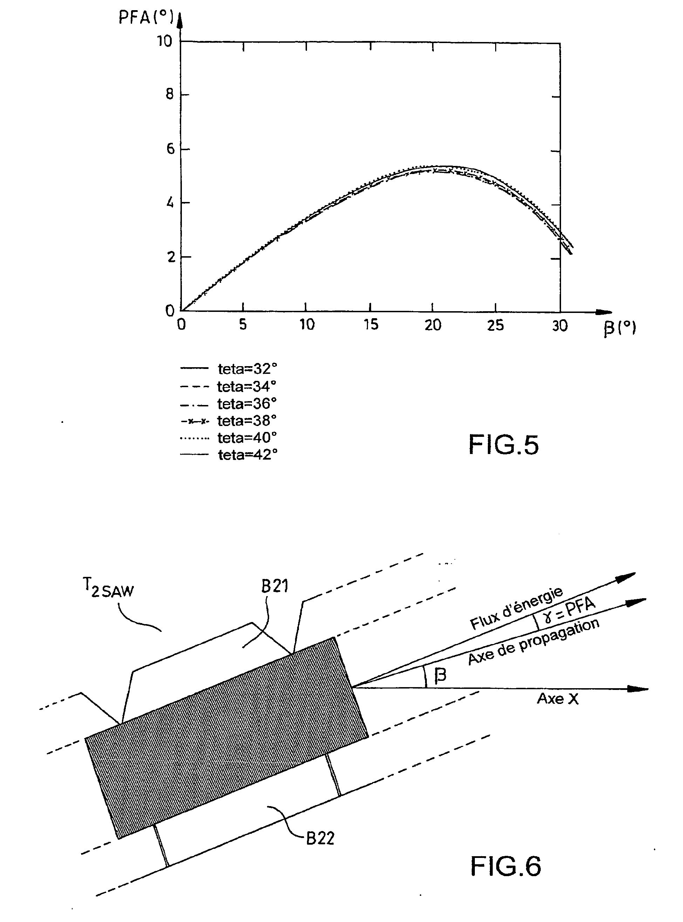

La présence d'un capteur incliné permet ainsi de déterminer la température, néanmoins un problème de divergence de flux d'énergie des ondes acoustiques le long de la direction de propagation, se pose en raison de l'angle d'inclinaison du résonateur par rapport à la direction X. La figure 5 schématise cette divergence en mettant en évidence l'angle PFA que fait le flux d'énergie des ondes acoustiques de surface par rapport à la direction de propagation X' Si l'on utilise des bus parallèles à l'angle de propagation X', le flux d'énergie va sortir du transducteur et on va dégrader de manière importante le coefficient de qualité du résonateur. On constate sur cette figure que cet angle de flux d'énergie peut atteindre des valeurs aussi importantes que 5° pour des angles de propagation de 20° et ce pour des angles de coupe θ.

Pour résoudre ce problème, la présente invention propose un capteur à ondes acoustiques de surface à interrogation à distance permettant la mesure de la température, comportant au moins deux résonateurs connectés en parallèle sur une antenne et fonctionnant à des fréquences différentes, le principe de mesure étant basé sur une mesure de l'écart de fréquence entre un premier et un second résonateurs, le second résonateur étant incliné par rapport au premier et possédant des bus d'électrodes inclinés d'un angle γ par rapport à la normale à ses électrodes dudit troisième résonateur, de manière à compenser la différence entre la direction du flux d'énergie et la direction du vecteur de phase (power flow angle en anglais).

Plus précisément la présente invention a pour objet un capteur à ondes acoustiques de surface comportant à la surface d'un substrat de quartz de coupe Y+ θ

au moins deux résonateurs comportant des transducteurs constitués d'électrodes interdigitées connectées à des bus de commande et de conception telle qu'ils présentent des fréquences caractéristiques de fonctionnement différentes, un premier résonateur ayant une première direction de propagation des ondes acoustiques de surface parallèle à un des axes du substrat cristallin, un second résonateur ayant une direction de propagation des ondes acoustiques de surface faisant un angle non nul avec la direction de propagation des premier et second résonateurs

caractérisé en ce que les bus de commande du second transducteur sont inclinés par rapport à la normale aux électrodes interdigitées dudit second transducteur de manière à compenser la divergence de flux d'énergie des ondes acoustiques par rapport à la direction de propagation des ondes acoustiques de surface le long dudit second transducteur.

De plus la demanderesse a montré que pour un angle de propagation donné β, l'angle de flux d'énergie PFA s'exprime en fonction de l'angle de coupe θ et de l'angle de propagation β :

$$PFA(\beta, \theta) \approx A1(\theta)\beta + A2(\theta)\beta^3 + A3(\theta)\beta^5$$

$$A1(\theta) = 0.6259 - 0.014\theta + 1.9152.10^{-4}\theta^2$$

$$A2(\theta) = -5.1796.10^{-4} + 1.2673.10^{-5}\theta - 1.397.10^{-7}\theta^2$$

$$A3(\theta) = 4.3.10^{-8} - 4.8611.10^{-9}\theta + 4.5141.10^{-11}\theta^2$$

Cette expression est valable pour un angle de propagation β compris entre -30° et 30° et un angle de coupe situé entre 30° et 45°. Elle permet de déterminer l'angle γ égal à l'angle PFA que doivent faire les bus avec la perpendiculaire aux électrodes.

Le capteur selon l'invention étant conçu pour fonctionner dans une bande de fréquences donnée, les fréquences caractéristiques de chacun des résonateurs sont telles qu'elles appartiennent à ladite bande et présentent une différence de fréquence maximale pour favoriser une meilleure sensibilité du capteur.

Avantageusement le capteur selon l'invention peut fonctionner dans la bande ISM (Industrial Scientific and Medical) autour de 434 MHz, plus précisément dans la bande située entre 433.05 MHz et 434.79 MHz. Il existe d'autres bandes ISM qui pourraient être utilisées pour les capteurs dans les gammes 868 MHz et 2.4 GHz. Les limites de bandes et de puissance dépendent des régulations locales. Selon un mode préférentiel de l'invention, le substrat est un cristal de quartz, de coupe Y' faisant un angle θ avec l'axe cristallographique Y pouvant être compris entre 30° et 45° et le premier résonateur a une direction de propagation des ondes de surface parallèle à l'axe X du cristal. La direction de propagation des ondes acoustiques de surface au sein du second résonateur peut typiquement faire un angle β inférieur à 30° et pouvant être compris entre 14° et 22° par rapport à la direction X.

Dans cette configuration, l'angle γ des bus de commande du second résonateur par rapport à la direction de propagation des ondes peut typiquement être compris entre 5° et 6°.

Dans le cas d'un capteur sur substrat de quartz, des modes de propagation transverses viennent perturber la propagation des modes de propagation longitudinaux. Pour supprimer ces modes transverses, les transducteurs peuvent avantageusement être pondérés, c'est à dire qu'au sein des transducteurs, le recouvrement entre électrodes interdigitées est variable. Une fonction de pondération efficace peut typiquement être une fonction en arc cosinus présentant un maximum de recouvrement au centre et des zéros aux extrémités. Plus précisément si z est le recouvrement entre électrodes au sein d'un transducteur :

$$z(x) = arc\ cos(x)\ avec\ x = 0,\ au\ centre\ du\ transducteur.$$

De manière préférentielle, chaque résonateur comprend un transducteur inséré entre deux réseaux d'électrodes, pour chacun des réseaux on peut avantageusement choisir une période d'électrodes telle que le coefficient de réflexion soit centré sur la fréquence centrale de fonctionnement du résonateur. En d'autres termes, cela signifie que la phase de propagation sur une période est égale à 180° à la fréquence centrale (on parle souvent de fréquence de Bragg ou de synchronisme) ; ceci permet d'optimiser le coefficient de qualité du résonateur tout en réduisant au maximum la longueur des réseaux.

L'invention a aussi pour objet un capteur de pression et de température interrogeable à distance à ondes acoustiques de surface, comportant en outre un troisième résonateur ayant une direction de propagation des ondes acoustiques de surface parallèle à celle du premier transducteur et des moyens pour appliquer une pression sur ledit troisième transducteur.

Selon une variante de l'invention le capteur est caractérisé en ce que
les périodes des premiers, seconds et troisièmes réseaux réflecteurs sont respectivement égales à 3.62 μm, 3.69 μm et 3.62 μm, les périodes des premier, second et troisième transducteur sont respectivement égales à 3.60, 3.67 et 3.60. les distances entre réseaux réflecteurs et transducteurs sont respectivement égales à 3.28 μm et 3.28 μm dans le premier résonateur, à 3.82 μm et à 2.85 μm dans le second résonateur et à 3.27 μm et à 3.27 μm dans le troisième résonateur.

l'ouverture des transducteurs au sein des trois résonateurs est égale à 350 $\mu$m.

le nombre d'électrodes au sein des réseaux est égal respectivement à 270, 360 et 270.

le nombre d'électrodes au sein des transducteurs est égal respectivement à 136, 164 et 136.

L'invention a aussi pour objet un dispositif de mesure de pression et de température, comprenant un capteur selon l'invention et un système d'interrogation à distance.

L'invention sera mieux comprise et d'autres avantages apparaîtront grâce à la description qui va suivre et grâce aux figures annexées parmi lesquelles :

- la figure 1 schématise la structure d'un résonateur à ondes acoustiques de surface de faible largeur de bande passante, selon l'art connu
- la figure 2 illustre un capteur de pression et de température interrogeable à distance, selon l'art antérieur
- La figure 3 illustre les variations d'écart $\Delta$CTF1 pour différents points de fonctionnement (épaisseur/ taux de métallisation), et différents angles de coupe.
- La figure 4 illustre les variations des écarts $\Delta$CTF1 pour différents angles de coupe et différents angles de propagation
- La figure 5 illustre la divergence d'angle de flux au sein d'un résonateur incliné dans un capteur selon l'invention, en fonction de l'angle de propagation, pour différents angles de coupe.
- la figure 6 illustre le résonateur incliné du capteur selon l'invention et ses bus de commande orientés pour optimiser l'énergie acoustique.
- les figures 7 et 8 illustrent des fonctions arc cosinus de pondération pouvant être utilisées dans un capteur selon l'invention.
- la figure 9 illustre l'évolution de directivité en fonction de l'angle de propagation au sein du résonateur incliné, dans un exemple de capteur selon l'invention.

De manière générale, le capteur selon l'invention peut comprendre trois résonateurs , tels que celui représenté en figure 1, respectivement dénommés TISAW pour le résonateur de référence, PSAW pour le résonateur soumis à des variations de pression et T2SAW pour le résonateur destiné à des mesures de température, dans une configuration identique à celle illustrée en figure 2 avec R1→T1SAW, R2→PSAW et R3→T2SAW.

Notons que le résonateur PSAW n'est pas obligatoire, on peut réaliser simplement un capteur de température interrogeable à distance.

Ces trois résonateurs sont connectés entre eux en parallèle comme illustré en figure 2 et également connectés à une antenne.

Les résonateurs T1SAW et PSAW sont disposés sur le substrat selon l'axe X, le résonateur T2SAW est disposé selon la direction X' qui fait un angle $\beta$ avec la direction X. Les bus de commande B21 et B22 des électrodes interdigitées du résonateur T2SAW sont inclinés d'un angle $\gamma$ par rapport à l'angle $\beta$ de manière à utiliser l'ensemble du flux d'énergie au sein dudit troisième résonateur, comme illustré en figure 6.

## EXEMPLE DE REALISATION DE CAPTEUR SELON L'INVENTION FONCTIONNANT DANS LA BANDE ISM

Selon cet exemple de réalisation, les trois résonateurs sont placés à des fréquences différentes. Les fréquences nominales sont respectivement 434.26 MHz, 433.83 MHz et 433.28 MHz. Ce choix permet à la fois de ne pas sortir de la bande ISM (433.05 MHz à 434.79 MHz) et d'écarter le plus possible les trois fréquences. Le principe de mesure est basé sur une mesure de l'écart de fréquence entre deux résonateurs. Le premier résonateur T1SAW permet d'obtenir une fréquence de référence. La mesure de pression est obtenue en soumettant le résonateur seul PSAW à une pression. Il existe plusieurs moyens de mettre le résonateur en pression. Un des moyens est de ne pas supporter le résonateur et d'appuyer dessus avec le couvercle. Les résonateurs T1SAW et PSAW étant à la même température, l'écart de fréquence obtenu pour ces deux résonateurs est proportionnel uniquement à la pression appliquée. Les résonateurs sont réalisés sur un substrat de quartz de coupe Y+34°. La direction de propagation utilisée est la direction X pour les résonateurs T1SAW et PSAW. La direction utilisée pour le résonateur T2SAW est X+18°. Il faut bien noter que le quartz présente une symétrie par rapport à l'axe X, ce qui implique que les angles $\beta$ et - $\beta$ sont équivalents. Le résonateur T2SAW pourra donc être remplacé sans aucun changement des propriétés par un résonateur symétrique par rapport à X+90°, c'est à dire suivant l'axe X+162°. Ceci est équivalent à réaliser une symétrie par rapport à l'axe x et ensuite une rotation de 180° du dispositif.

Tous les résonateurs ont une loi de dépendance fréquence température quadratique avec un coefficient du second ordre qui peut être considéré comme identique. Par contre, la température d'inversion de la courbe fréquence température dépend de l'angle de propagation. Cette température est à -25°C pour les résonateurs T1SAW et PSAW, elle est à +25°C pour le résonateur T2SAW. La différence de fréquence entre les résonateurs T1SAW et T2SAW est donc proportionnelle à la température ce qui permet une mesure de la température.

Pour supprimer les modes transverses, on pondére les transducteurs avec une pondération de type cosinus, c'est à dire que l'on choisit de faire varier les longueurs de recouvrement des électrodes suivant une fonction en arc cosinus présentant un maximum au centre et des zéros aux extrémités. Cette pondération permet de ne coupler que le mode principal.

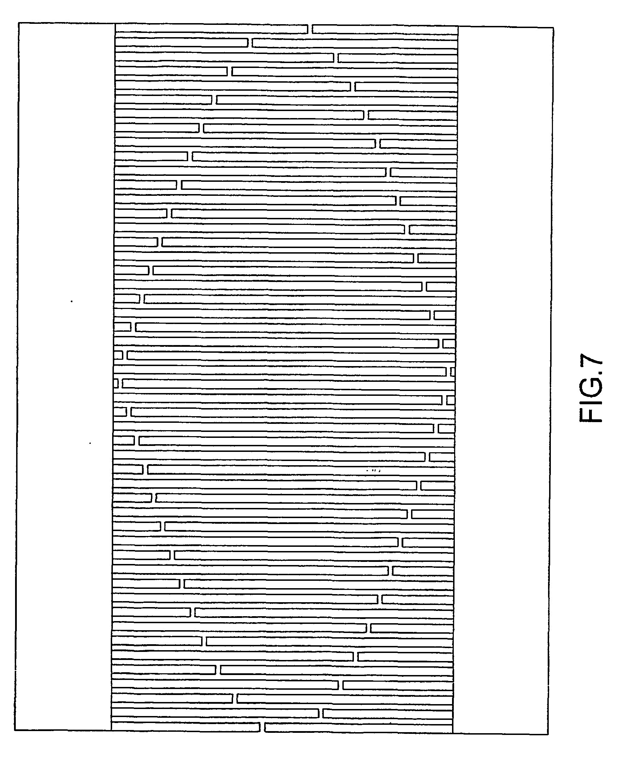

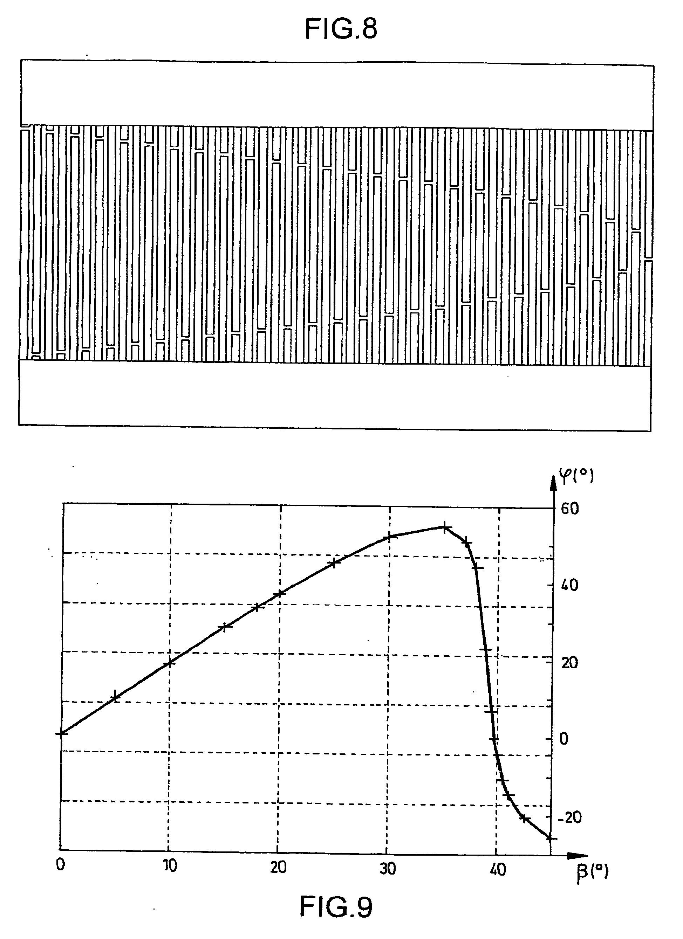

Les figures 7 et 8 illustrent deux types de fonction en arc cosinus respectivement symétrique et antisymétrique qui peuvent avantageusement être utilisées dans un capteur selon l'invention.

*Choix des périodes des réseaux et transducteurs*

Une manière de concevoir le capteur est décrite ci-après :

- Pour chaque résonateur, on choisit une période de réseau telle que le coefficient de réflexion des réseaux, soit centré sur la fréquence centrale visée du résonateur.
- Pour les résonateurs T1SAW et PSAW, on choisit des distances entre les extrémités des électrodes des réseaux et celles des transducteurs pour maximiser le couplage du transducteur avec la cavité résonante. Typiquement le décalage optimal des réflecteurs par rapport aux réseaux peut-être égal à 0.45λ. Ce décalage s'entend comme la distance que l'on rajoute entre réseaux et transducteurs. En d'autres termes, si Pr est la période dans le réseau et Pt dans le transducteur, la distance entre les deux électrodes adjacentes du réseau et du transducteur est :

$$\frac{Pr+Pt}{2} + 0.45\lambda$$

Lorsque l'angle de propagation n'est pas nul et donc pour le résonateur T2SAW, les deux directions de propagation ne sont pas équivalentes et il existe une phase entre coefficient de réflexion et transduction. Cet effet physique dit souvent effet NSPUDT en anglais est lié à l'anisotropie des cristaux. Il est équivalent à considérer que le centre de réflexion d'une électrode réflective n'est pas au centre de l'électrode mais est légèrement décalé. Lorsque l'on examine la phase de l'onde réfléchie sur un réseau, on obtient une valeur différente suivant que l'onde émise est émise vers la gauche (et donc réfléchie vers la droite) ou inversement. Si cet effet n'est pas compensé correctement dans la conception des résonateurs, il se traduit par l'apparition de modes parasites indésirés. Pour supprimer ces modes on décale de manière différente le réseau de gauche et le réseau de droite de manière à obtenir une phase identique des deux côtés entre le centre de transduction (c'est à dire le centre de la dernière électrode active du transducteur et le centre de réflexion) qui dépend de quel côté se trouve le réseau. Cette directivité dépend fortement de la coupe, de l'angle de propagation et surtout du point de fonctionnement utilisé (épaisseur de métal, taux de métallisation). Cette directivité peut être mesurée ou calculée en utilisant par exemple une méthode de type FEM/BEM [1]. On se reportera avantageusement à P. Ventura et al., « A NEW ACCURATE ANALYSIS OF PERIODIC IDTs. BUILT ON UNCONVENTIONAL ORIENTATION ON QUARTZ », 1997 IEEE Ultrasonics symp., pp 139-142. Un exemple de la variation de cet angle de directivité est donné par la figure 9, pour un angle de coupe de 42.75°, un rapport a/p égal à 0.75, un rapport h/2p égal à 1.6% et une période égale à 3.756 μm.

Pour compenser cet effet, il est nécessaire d'avoir une distance différente entre réseaux et transducteur du côté droit et du côté gauche. Cette distance est optimisée pour supprimer les modes parasites qui apparaissent si la compensation n'est pas correcte. Dans le cas où les taux de métallisation sont égaux sur les réseaux et le transducteur, on a trouvé que pour compenser cet effet, il faut augmenter la distance entre l'électrode extrême d'un réseau et celle du transducteur en regard de $\frac{\lambda}{2}\frac{\varphi}{360}$ (φ étant en degrés) d'un côté et en diminuant cette distance de la même valeur de l'autre. Les décalages entre réseaux et transducteurs sont ainsi respectivement égaux à $0.45\lambda + \frac{\lambda}{2}\frac{\varphi}{360}$ et à

$0.45\lambda - \frac{\lambda}{2}\frac{\varphi}{360}$ . Dans ces expressions, φ est la directivité en degrés qui est définie dans la référence précitée.

Cette directivité peut s'exprimer par la phase du coefficient de réflexion sur une électrode réflective qui est (avec une référence de phase au centre de l'électrode) :

$$Rgauche = -jr\exp(-2j\varphi)$$

$$\text{Rdroite} = -jr\exp(2j\varphi)$$

*Résonateur T2SAW et compensation de l'angle de flux d'énergie.*

Pour la direction X+18°, la direction du flux d'énergie et du vecteur d'onde sont différentes d'un angle égal à 5.3°. Cet effet est compensé en choisissant de réaliser des bus non perpendiculaires aux électrodes, conformément à l'invention. L'angle entre bus et électrodes est maintenant de 18°+5.3°=23.3°. Ceci permet d'avoir les limites du transducteur suivant la direction du flux d'énergie alors que les électrodes sont perpendiculaires au vecteur d'ondes.

*Nombre d'électrodes des transducteurs et ouverture*

Le nombre d'électrodes des transducteurs et leur ouverture sont choisis pour avoir une impédance proche de 50 ohms. Ceci permet de maximiser l'énergie électromagnétique réémise par le capteur.

*Tableau récapitulatif des données du capteur optimisé*

| Résonateur | Direction de propagation | Période réseaux $\mu$m | Période transducteurs $\mu$m | Décalages en $\mu$m | Nbre d'électrodes | Ouverture $\mu$m |
|---|---|---|---|---|---|---|
| PSAW | X | 3.62 | 3.60 | 3.27 | Nr=270 NT=136 | 350 |
| T1SAW | x | 3.62 | 3.60 | 3.28 | NR=270 NT=136 | 350 |
| T2SAW | X+18° | 3.69 | 3.67 | 3.82 2.85 | NR=360 NT=164 | 350 |

**Revendications**

1.  Capteur de température interrogeable à distance à ondes acoustiques de surface, comportant à la surface d'un substrat de quartz de coupe selon la direction Y' faisant un angle $\theta$ avec la direction Y,

    - au moins deux résonateurs (T1SAW, T2SAW), chaque résonateur étant constitué d'un transducteur comportant des électrodes inter-digitées, ledit transducteur étant placé entre deux réseaux d'électrodes réflecteurs ;
    - lesdits transducteurs étant connectés à des bus de commande et de conception telle que lesdits résonateurs présentent des fréquences caractéristiques de fonctionnement différentes,
    - un premier résonateur ayant une première direction de propagation des ondes acoustiques de surface, parallèle à un des axes du substrat et un second résonateur ayant une direction de propagation des ondes acoustiques de surface faisant un angle non nul (p) avec la direction de propagation du premier résonateur, **caractérisé en ce que** :
    - les bus de commande (B21, B22) du second transducteur sont inclinés d'un angle non nul ($\gamma$) par rapport à la normale aux électrodes inter- digitées dudit second transducteur de manière à compenser la divergence de flux d'énergie des ondes acoustiques par rapport à la direction de propagation des ondes acoustiques de surface le long dudit second transducteur et **caractérisé en ce que** le substrat est un cristal de quartz de coupe selon les axes cristallographiques (X, Y', Z), l'axe Y' faisant un angle $\theta$ avec l'axe Y, et **en ce que** l'angle des bus avec la direction de propagation des ondes au sein du second résonateur répond à la formule suivante à +/- 0.5 degrés près :

$$\gamma(\beta, \theta) \approx A1(\theta)\beta + A2(\theta)\beta^3 + A3(\theta)\beta^5$$

$$A1(\theta) = 0.6259 - 0.014\theta + 1.9152.10^{-4}\theta^2$$

$$A2(\theta) = -5.1796.10^{-4} + 1.2673.10^{-5}\theta - 1.397.10^{-7}\theta^2$$

$$A3(\theta) = 4.3.10^{-8} - 4.8611.10^{-9}\theta + 4.5141.10^{-11}\theta^2$$

- ledit second résonateur comprenant des distances non symétriques entre réseaux réflecteurs et transducteur.

2. Capteur selon la revendication 1, **caractérisé en ce que** la bande de fréquence de fonctionnement dudit capteur étant bornée entre une fréquence inférieure (Fi) et une fréquence supérieure (Fs), les fréquences caractéristiques de fonctionnement de chacun desdits résonateurs sont comprises dans ladite bande et présentent une différence maximale pour augmenter la sensibilité dudit capteur.

3. Capteur selon l'une des revendications 1 ou 2, **caractérisé en ce que** l'angle $\theta$ étant compris entre 30° et 40°, l'angle $\beta$ étant compris entre 14° et 22°, l'angle $\gamma$ est compris entre 5 ° et 6 °.

4. Capteur selon l'une des revendications 1 à 3, **caractérisé en ce qu'**il comprend au moins un résonateur comportant un transducteur avec une ouverture correspondant à la dimension de recouvrement entre électrodes interdigitées, présentant une fonction de pondération le long de l'axe de propagation des ondes acoustiques pour coupler le moins possible les modes de propagation transverse et donc pour réduire leur influence.

5. Capteur selon la revendication 4, **caractérisé en ce que** la fonction de pondération est une fonction en arc cosinus.

6. Capteur selon l'une des revendications précédentes, **caractérisé en ce que** chaque résonateur comprenant un transducteur inséré entre deux réseaux réflecteurs, les périodes des réseaux sont telles que le coefficient de réflexion des réseaux est centré sur la fréquence centrale dudit transducteur.

7. Capteur selon l'une des revendications 1 à 6, caractérisé en que les distances entre les deux réseaux réflecteurs et le transducteur sont respectivement égales à $0.45\lambda + \dfrac{\lambda}{2}\dfrac{\varphi}{360}$ et $0.45\lambda - \dfrac{\lambda}{2}\dfrac{\varphi}{360}$, avec longueur d'onde caractéristique du transducteur et $\varphi$ la phase de directivité entre le coefficient de réflexion et le coefficient de transduction.

8. Capteur selon l'une des revendications précédentes, **caractérisé en ce que** les résonateurs ont une impédance proche ou égale à 50 ohms.

9. Capteur de température et de pression, **caractérisé en ce qu'**il comprend un capteur de température selon l'une des revendications précédentes et sur le substrat dudit capteur de température, un troisième résonateur (PSAW) et des moyens pour appliquer une pression sur ledit troisième résonateur, ledit résonateur ayant une direction de propagation des ondes acoustiques de surface, parallèle à la direction de propagation des ondes acoustiques de surface du premier résonateur.

10. Capteur selon l'une des revendications précédentes, **caractérisé en ce que** les résonateurs sont connectés à une antenne et en parallèle.

11. Capteur selon la revendication 10, **caractérisé en ce que**

- les périodes des premiers, seconds et troisièmes réseaux réflecteurs sont respectivement égales à 3.62 $\mu$m, 3.69 $\mu$m et 3.62 $\mu$m, les périodes des premier, second et troisième transducteurs sont respectivement égales à 3.60, 3.67 et 3.60.
- les distances entre réseaux réflecteurs et transducteurs sont respectivement égales à 3.28 $\mu$m et 3.28 $\mu$m dans le premier résonateur, à 3.82 $\mu$m et à 2.85 $\mu$m dans le second résonateur et à 3.27 $\mu$m et à 3.27 $\mu$m dans le troisième résonateur.

**EP 1 704 396 B1**

- l'ouverture des transducteurs au sein des trois résonateurs est égale à 350 $\mu$m.
- le nombre d'électrodes au sein des réseaux est égal respectivement à 270, 360 et 270.
- le nombre d'électrodes au sein des transducteurs est égal respectivement à 136, 164 et 136.

12. Dispositif de mesure de pression et de température, comprenant un capteur selon l'une des revendications précédentes et un système d'interrogation à distance.

**Patentansprüche**

1. Aus der Ferne mit akustischen Oberflächenwellen testbarer Temperatursensor, der auf der Oberfläche eines gemäß der Richtung Y' in einem Winkel $\theta$ geschnittenen Quarzsubstrats mit der Richtung Y aufweist:

   - mindestens zwei Resonatoren (T1SAW, T2SAW), wobei jeder Resonator aus einem Transduktor besteht, der interdigitale Elektroden aufweist, wobei der Transduktor zwischen zwei reflektierenden Elektrodennetzen platziert ist,
   - wobei die Transduktoren mit Steuerbussen verbunden und derart konzipiert sind, dass die Resonatoren verschiedene charakteristische Betriebsfrequenzen aufweisen,
   - wobei ein erster Resonator eine erste Ausbreitungsrichtung der akustischen Oberflächenwellen parallel zu einer der Substratachsen hat und ein zweiter Resonator eine Ausbreitungsrichtung der akustischen Oberflächenwellen in einem Winkel von nicht null ($\beta$) mit der Ausbreitungsrichtung des ersten Resonators hat, **dadurch gekennzeichnet, dass**
   - die Steuerbusse (B21, B22) des zweiten Transduktors in einem Winkel von nicht null ($\gamma$) im Verhältnis zur Normalen zu den interdigitalen Elektroden des zweiten Transduktors derart geneigt sind, dass die Energieflussdivergenz der Schallwellen im Verhältnis zur Ausbreitungsrichtung der akustischen Oberflächenwellen entlang des zweiten Transduktors kompensiert wird und **dadurch gekennzeichnet, dass** das Substrat ein gemäß den kristallographischen Achsen (X, Y', Z) geschnittener Quarzkristall ist, wobei die Achse Y' mit der Achse Y einen Winkel $\theta$ bildet, und dass der Winkel der Busse mit der Ausbreitungsrichtung der Wellen innerhalb des zweiten Resonators bei zirka +/- 0,5 Grad der folgenden Formel entspricht:

   $$\gamma(\beta,\theta) \approx A1(\theta)\beta + A2(\theta)\beta^3 + A3(\theta)\beta^5$$

   $$A1(\theta) = 0.6259 - 0.014\theta + 1.9152.10^{-4}\,\theta^2$$

   $$A2(\theta) = -5.1796.10^{-4} + 1.2673.10^{-5}\theta - 1.397.10^{-7}\,\theta^2$$

   $$A3(\theta) = 4.3.10^{-8} - 4.8611.10^{-9}\,\theta + 4.5141.10^{-11}\theta^2$$

   - wobei der zweite Resonator nicht symmetrische Distanzen zwischen reflektierenden Netzen und Transduktor umfasst.

2. Sensor nach Anspruch 1, **dadurch gekennzeichnet, dass**, da das Betriebsfrequenzband des Sensors zwischen einer niedrigen Frequenz (Fi) und einer hohen Frequenz (Fs) begrenzt ist, sich die charakteristischen Betriebsfrequenzen jedes der Resonatoren in dem Band befinden und eine maximale Differenz aufweisen, um die Sensibilität des Sensors zu erhöhen.

3. Sensor nach einem der Ansprüche 1 oder 2, **dadurch gekennzeichnet, dass**, da der Winkel $\theta$ zwischen 30° und 40° ist, der Winkel $\beta$ zwischen 14° und 22° ist, der Winkel $\gamma$ zwischen 5° und 6° ist.

4. Sensor nach einem der Ansprüche 1 bis 3, **dadurch gekennzeichnet, dass** er mindestens einen Resonator umfasst, der einen Transduktor mit einer Öffnung aufweist, der der Abdeckungsdimension zwischen interdigitalen Elektroden entspricht, wobei er eine Gewichtungsfunktion entlang der Ausbreitungsachse der akustischen Wellen aufweist, um die Modi der transversen Ausbreitung so wenig wie möglich zu koppeln und demzufolge ihren Einfluss zu reduzieren.

9

5. Sensor nach Anspruch 4, **dadurch gekennzeichnet, dass** die Gewichtungsfunktion eine Arkuskosinusfunktion ist.

6. Sensor nach einem der vorangehenden Ansprüche, **dadurch gekennzeichnet, dass**, da jeder Resonator einen zwischen zwei reflektierenden Netzen eingesetzten Transduktor umfasst, die Netzperioden derart sind, dass der Reflexionskoeffizient der Netze auf der zentralen Frequenz des Transduktors zentriert ist.

7. Sensor nach einem der Ansprüche 1 oder 6, **dadurch gekennzeichnet, dass** die Distanzen zwischen den zwei reflektierenden Netzen und dem Transduktor jeweils gleich $0.45\lambda + \frac{\lambda}{2}\frac{\varphi}{360}$ und $0.45\lambda - \frac{\lambda}{2}\frac{\varphi}{360}$ sind mit $\lambda$ als charakteristischer Wellenlänge des Transduktors und $\varphi$ als Direktivitätsphase zwischen dem Reflexionskoeffizienten und dem Transduktionskoeffizienten.

8. Sensor nach einem der vorangehenden Ansprüche, **dadurch gekennzeichnet, dass** die Resonatoren eine Impedanz in der Nähe oder von gleich 50 Ohm haben.

9. Temperatur- und Drucksensor, **dadurch gekennzeichnet, dass** er einen Temperatursensor nach einem der vorangehenden Ansprüche umfasst und auf dem Substrat des Temperatursensors einen dritten Resonator (PSAW) und Mittel, um einen Druck auf den dritten Resonator anzulegen, wobei der Resonator eine Ausbreitungsrichtung der akustischen Oberflächenwellen parallel zur Ausbreitungsrichtung der akustischen Oberflächenwellen des ersten Resonators hat.

10. Sensor nach einem der vorangehenden Ansprüche, **dadurch gekennzeichnet, dass** die Resonatoren mit einer Antenne und parallel verbunden sind.

11. Sensor nach Anspruch 10, **dadurch gekennzeichnet, dass**:

- die Perioden des ersten, zweiten und dritten reflektierenden Netzes jeweils gleich 3,62 $\mu$m, 3,69 $\mu$m und 3,62 $\mu$m sind, die Perioden des ersten, zweiten und dritten Transduktors jeweils gleich 3,60, 3,67 und 3,60 sind,
- die Distanzen zwischen reflektierenden Netzen und Transduktoren im ersten Resonator jeweils gleich 3,28 $\mu$m und 3,28 $\mu$m sind, im zweiten Resonator gleich 3,82 $\mu$m und 2,85 $\mu$m sind und im dritten Resonator gleich 3,27 $\mu$m und 3,27 $\mu$m sind,
- die Öffnung der Transduktoren innerhalb der drei Resonatoren gleich 350 $\mu$m ist,
- die Anzahl der Elektroden innerhalb der Netze jeweils gleich 270, 360 und 270 ist,
- die Anzahl der Elektroden innerhalb der Transduktoren jeweils gleich 136, 164 und 136 ist.

12. Druck- und Temperaturmessvorrichtung, die einen Sensor nach einem der vorangehenden Ansprüche und ein Ferntestsystem umfasst.

## Claims

1. A remotely testable surface acoustic wave temperature sensor, comprising on the surface of a quartz substrate cut along the direction Y' making an angle $\theta$ with the direction Y:

- at least two resonators (T1SAW, T2SAW), each resonator being constituted by a transducer comprising inter-digitated electrodes, said transducer being placed between two reflector arrays of electrodes;
- said transducers being connected to control buses and designed such that said resonators have different characteristic operating frequencies;
- a first resonator having a first surface acoustic wave direction of propagation parallel to one of the axes of the substrate and a second resonator having a surface acoustic wave direction of propagation making a non-zero angle ($\beta$) with the direction of propagation of said first resonator, **characterised in that**:
- the control buses (B21, B22) of said second transducer are inclined by a non-zero angle ($\gamma$) relative to the normal of the inter-digitated electrodes of said second transducer so as to compensate for the divergence of energy flows of the acoustic waves relative to the direction of propagation of the surface acoustic waves along the length of said second transducer, and **characterised in that** said substrate is a quartz crystal substrate cut along the crystallographic axes (X, Y', Z), the axis Y' forming an angle $\theta$ with the axis Y, and **in that** the angle of the buses with the direction of propagation of the waves within said second resonator fulfils the following formula to within +/- 0.5 degrees:

$$\gamma(\beta, \theta) \approx A1(\theta)\beta + A2(\theta)\beta^3 + A3(\theta)\beta^5$$

$$A1(\theta) = 0.6259 - 0.014\theta + 1.9152.10^{-4}\theta^2$$

$$A2(\theta) = 5.1796.10^{-4} + 1.2673.10^{-5}\theta - 1.397.10^{-7}\theta^2$$

$$A3(\theta) = 4.3.10^{-8} - 4.8611.10^{-9}\theta + 4.5141.10^{-11}\theta^2$$

- said second resonator comprising non-symmetric distances between reflector arrays and transducer.

2. The sensor according to claim 1, **characterised in that**, with the operating frequency band of said sensor being limited between a lower frequency (Fi) and an upper frequency (Fs), the characteristic operating frequencies of each of said resonators are between said band and have a maximum difference so as to increase the sensitivity of said sensor.

3. The sensor according to claim 1 or 2, **characterised in that**, with the angle $\theta$ being between 30° and 40°, the angle $\beta$ being between 14° and 22°, the angle $\gamma$ is between 5° and 6°.

4. The sensor according to any one of claims 1 to 3, **characterised in that** it comprises at least one resonator comprising one transducer with an aperture corresponding to the coverage dimension between inter-digitated electrodes, having a weighting function along the length of the axis of propagation of the acoustic waves so as to couple the transverse propagation modes as little as possible and thus reduce their influence.

5. The sensor according to claim 4, **characterised in that** the weighting function is an arc cosine function.

6. The sensor according to any one of the preceding claims, **characterised in that**, with each resonator comprising a transducer inserted between two reflector arrays, the periods of said arrays are such that the reflection coefficient of said arrays is centred on the central frequency of said transducer.

7. The sensor according to any one of claims 1 to 6, **characterised in that** the distances between said two reflector arrays and said transducer are respectively equal to $0.45\lambda + \frac{\lambda}{2}\frac{\varphi}{360}$ and $0.45\lambda - \frac{\lambda}{2}\frac{\varphi}{360}$, with $\lambda$ being the wavelength characteristic of said transducer and $\varphi$ being the directivity phase between the reflection coefficient and the transduction coefficient.

8. The sensor according to any one of the preceding claims, **characterised in that** said resonators have impedance that is close to or equal to 50 ohms.

9. A temperature and pressure sensor, **characterised in that** it comprises a temperature sensor according to any one of the preceding claims and, on the substrate of said temperature sensor, a third resonator (PSAW) and means for applying pressure to said third resonator, said resonator having a surface acoustic wave direction of propagation parallel to the direction of propagation of the surface acoustic waves of said first resonator.

10. The sensor according to any one of the preceding claims, **characterised in that** said resonators are connected to an antenna and are in parallel.

11. The sensor according to claim 10, **characterised in that**:

- the periods of said first, second and third reflector arrays are equal to 3.62 $\mu$m, 3.69 $\mu$m and 3.62 $\mu$m, respectively, the periods of said first, second and third transducers are equal to 3.60, 3.67 and 3.60, respectively;
- the distances between reflector arrays and transducer are equal to 3.28 $\mu$m and 3.28 $\mu$m in said first resonator,

to 3.28 μm and to 2.85 μm in said second resonator and to 3.27 μm and to 3.27 μm in said third resonator, respectively;
- the aperture of the transducers within said three resonators is equal to 350 μm;
- the number of electrodes within said arrays is equal to 270, 360 and 270, respectively;
- the number of electrodes within said transducers is equal to 136, 164 and 136, respectively.

12. A device for measuring pressure and temperature, comprising a sensor according to any one of the preceding claims and a remote testing system.

IN

T

RR1

RR2

Masse

# FIG.1

R2

R1

R3

β

Axe X

Z

X

Y

# FIG.2

FIG.3

FIG.4

FIG.5

FIG.6

FIG.7

## FIG.8

## FIG.9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **P. VENTURA et al.** A NEW ACCURATE ANALYSIS OF PERIODIC IDTs. BUILT ON UNCONVENTIONAL ORIENTATION ON QUARTZ. *IEEE Ultrasonics symp.,* 1997, 139-142